(19)

Europäisches
Patentamt

European
Patent Office

Office européen
des brevets

(11) **EP 3 953 815 B1**

(12) **EUROPEAN PATENT SPECIFICATION**

(45) Date of publication and mention
of the grant of the patent:
**18.09.2024 Bulletin 2024/38**

(21) Application number: **19770207.9**

(22) Date of filing: **27.02.2019**

(51) International Patent Classification (IPC):
***G06F 9/54*** *(2006.01)*

(52) Cooperative Patent Classification (CPC):
**G06F 9/546**

(86) International application number:
**PCT/RU2019/000127**

(87) International publication number:
**WO 2020/176006 (03.09.2020 Gazette 2020/36)**

(54) **COMPUTING DEVICE AND COMPUTING SYSTEM BASED ON SAID DEVICE**

RECHENVORRICHTUNG UND AUF DIESER VORRICHTUNG BASIERENDES RECHENSYSTEM

DISPOSITIF INFORMATIQUE ET SYSTÈME INFORMATIQUE BASÉ SUR LEDIT DISPOSITIF

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**16.02.2022 Bulletin 2022/07**

(73) Proprietor: **Sciensys**
**75016 Paris (FR)**

(72) Inventor: **STARIKOV, Evgeny Veniaminovich**
**Moscow, 117312 (RU)**

(74) Representative: **Reinhardt, Yves et al**
**THARINDER**
**6ième étage**
**48 Rue Saint-Honoré**
**75001 Paris (FR)**

(56) References cited:
**EP-A1- 1 902 362    US-A1- 2017 139 756**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The invention relates to computing devices and computer architectures to carry out efficient parallel computation.

To organize multiprocessor systems, three main computing device architectures for effective parallel computations (or computation parallelization) are known, these being a shared memory architecture, a separate memory architecture, and a non-uniform memory access architecture.

In the shared memory (or Uniform Memory Access, UMA) architecture all processors are connected to a physically shared memory bank. Such architecture is advantageous because it is simple to implement, and each processor can have equal access to the entire memory address space. The disadvantage of the computing system based on the shared memory architecture is in the so-called "Memory Wall" problem: the more processors using a single common bus connecting processors and memory are used, the more intense the conflict between processors for memory access is. Consequently, at some point every new added processor will reduce the overall computing system efficiency.

The separate memory architecture is a cluster of multiple nodes. Each unit comprises several processors and an own memory bank. Processors of one node can access only their own memory bank. The nodes share data by means of a network messaging system connecting these nodes. Examples can include a group (cluster) of workstations (nodes) connected via LAN. The drawback of this architecture is in extreme programming complexity related to the multiplicity of general data processing procedures launched on different nodes, and the synchronization of such procedures. However, this separate memory architecture is used to build the most powerful supercomputers.

The non-uniform memory access, or NUMA, architecture and variants thereof are a combination of two previously described architectures. Here a cluster is divided into nodes, and each node comprises its own memory bank but these memory banks, being distributed physically, are virtually combined to form a single address space. For instance, an address used by a memory bank of a first node lies within 0 to 1023, an address of a second node lies within 1024 to 2047, etc. Memory access time depends on the address: the processor access time to the memory bank in the "own" node is minimal, but when the processor accesses a memory bank of a "foreign" node, the access time is increased due to transmission of data between the nodes. The longer the distance between the nodes is, the longer it takes for the processor to access the "foreign" node memory bank. The problem of the relatively high access time is partially solved by use of network caches (or cache coherent systems with a shared and separate memory, ccNUMA), although said problem is still of concern for high-performance systems.

From ARVIND and RISHIYUR S. NIKHIL. Executing a Program on the MIT Tagged-Token Dataflow Architecture. IEEE Trans. on Computers, vol. 39, No. 3, March 1990, pp. 300-318 the computing architecture is known operating exclusively in the data flow mode, or by readiness of data, a so-called the "dataflow architecture", and comprising multiple computing devices. The architecture has an instructions memory that is common to all computing devices and provides for parallelization of the computation. For this purpose, a special programming language Id and a respective compiler intended for this specific computing architecture (also known as "a MIT architecture") are used, which is one of the main drawbacks of this approach to the parallelization. Data processed by instructions are located in the associative memory. Since this type of memory is expensive and energy-consumptive, the MIT architecture uses the associative memory of small capacity. Consequently, the amount of stored processed data is low. The parallelization is carried out at a level of instructions performed in a data flow (i.e. when data are ready), and a possibility to execute a program in the mode of instruction flow is not provided at all by the MIT architecture.

In WO2006131297 (published on 14.12.2006, IPC G06F15/82, G06F9/44) disclosed is the data flow-based information processing system comprising one or more associative memory modules, the first switch, the second switch, the second memory adapted to temporarily store pairs of data and tokens, the second memory adapter and the parallelism-regulating processor. Each associative memory module comprises plurality of executive units to process pairs of data from the associative memory module. Data is transferred between the associative memory modules and the executive units in the form of tokens comprising a data field and a key field. The associative memory modules store the tokens, search for the tokens within the stored tokens having the key that matches the key of the incoming token; in case the search fails, keep the incoming token in the memory; in case of the successful search, form a data pair based on the token entering the associative memory and the token found in the associative memory; direct the formed data pair to any of the executive units. The executive unit is used to execute instructions stored in the instructions memory accessible by the executive units at addresses specified in the data pair; to form the token comprising the data field and the key field, where the data field comprises a result of the instruction, and the key field is filled with an information about the instruction for which said result appears to be a parameter; to calculate a hash function that determines an ID of the associative memory module; to direct the formed token to any ID of the associative memory module according to the calculated hash function. The first switch directs the tokens from any of the executive units to any of the associative memory modules; receives tokens entering from other similar information processing systems and comprising the ID of the system for which they are intended; detects the tokens intended for the system which the first switch belongs to; directs the detected tokens to the associative memory of this system. The second switch directs data pairs from any of the associative memory modules to any of the executive units.

To control the processing and save occupied volume of the associative memory, the system of WO2006131297 comprises the second memory adapted to temporarily store the pairs of data and tokens. The second memory receives the tokens to be stored from the executive units and the associative memory; receives the pairs of data to be stored from the associative memory; outputs the stored tokens and pairs of data to the associative memory. The second memory is controlled by the second memory adapter that determines a location in the second memory for storing the tokens and the pairs, distinguishes the tokens as "tokens unloaded by a cover token", "unloaded written tokens" and determines a location to store in the second memory the tokens of different types. In addition to gathering information about loading efficiency of the associative memory and the executive units, the parallelism-regulating processor directs the tokens from the associative memory to the second memory and backward, directs the control tokens to the associative memory and directs the pairs of data from the second memory to the executive units.

US2017139756 A1 published on 18-05-2017 discloses also a system evolved from the system disclosed in WO2006131297. The system is arranged for enabling a software procedure executed on any executive unit to cause the latter to call another software procedure on another executive unit by sending a data stream to it containing a procedure identifier of the other procedure and the parameters for its execution. An executive unit arbiter of the system is able to identify a free executive unit among the executive units. So it is possible for an executive unit to call a procedure on any other executive unit by cooperating with the latter. The system allows to run control-flow based programs, but also data-flow based programs with help on an associative memory which may be implemented in hardware or software.

Said data flow-based information processing system of WO2006131297 appears to be the closest analogue of the present invention. This system provides for the increase of operational reliability, in particular reduces the risk of a deadlock event (or deadlocks) upon overflowing of at least one associative memory module in the course of the computational process, as well as provides means for controlling the course of the computational process at an operating system and a user end.

The drawback of the closest analogue is that the deadlocks cannot be prevented completely since this system can only control a program in a data flow mode. Consequently, there is a need to use a further parallelism-regulating processor responsible for loading of the associative memory. In addition, the closest analogue requires the use of a larger associative memory that is power consuming and expensive. Another drawback is the overall complexity of the computing system which requires to form and transmit additional tokens to reduce the risk of deadlocks.

The present invention is aimed at addressing the drawbacks of the known systems, including the drawbacks of the closest analogue.

The object of the present invention is to provide a computing device and a computing system based on such computing device, which automatically parallelize computations between computing devices during execution of a program in the computing system, along with the use of two levels of parallelism, namely a so-called "coarse-grain" parallelization of computations and a "fine-grain" parallelization of computations.

The coarse-grain parallelization of computations is executed at the level of procedures included into a program. At this level, the program can be represented as a logic graph having nodes with the procedures allocated therein, while graph arcs connecting the nodes indicate a direction of data transmission between the procedures. As soon as all input parameters for a given procedure are ready, any vacant (i.e. not busy at this moment) processor of the computing system can automatically execute the procedure. Node exits are made to send messages of tokens having parameters to another node, i.e. to another procedure, according to the computational graph while the procedure is executed. The order of the procedure calls is of no importance; all that matters is readiness of the parameters at the inputs of the procedure to be executed. This allows to achieve the automatic parallelism at the procedure level.

The fine-grain parallelization of computations is executed at the level of instructions included into a device, hereinafter also called as a specific co-processor or just a co-processor (CP). The architecture and mode of operation of this CP for parallel processing of data represented as matrices will be described below. It should be noted that, in general, the CP is not a vector processor, because each core of the CP (or CP core) can currently execute various instructions, including conditional statements (conditional operations).

In the CP, computations are made in the data-flow mode, and the data to be processed are stored in a RAM-type memory which is comprised in the CP core.

Basically the present invention provides for a hybrid computing system functioning both in the modes of data flow and instruction (or command) flow.

The technical effect achieved by the present invention is prevention of deadlocks, simplification of the computing device and computing system architecture, provision of a high parallelism with simultaneous reduction of requirement to a volume of associative memory used.

A co-processor (CP) of the present invention comprises a matching device; one or more executive units (EU) to execute elementary or arithmetic operations with integer and real numbers; a RAM-type memory (or a RAM-type memory controller) to store data and intermediate results of computations; an address computing device to convert an address given a predetermined format, e.g. in the form of [Row,Col], to an address in the RAM-type memory; a token generator to form resultant tokens for each of outputs; and a network controller to combine a plurality of computing devices into a network.

The operating principle of the computing system according to the present invention is in parallel operation of a plurality of procedures which control the course of computations in the CP in accordance with an operating algorithm of the procedure and provide a plurality of CPs with data in the form of tokens in accordance with a "send and forget" model. In other words, said plurality of procedures directs the data towards the computing devices and does not expect to receive any response from these computing devices, for instance, a computation result, to continue the execution.

Accordingly, in the computing system according to the present invention, it is suggested to control a program by a conventional von Neumann architecture via the procedures and to control computations in the data flow mode via the instructions, which creates a fundamental difference between the present invention and all already known approaches, including the closest analogue.

For the sake of better understanding the present invention, the following terms will be used.

**Node.** This is a logical functional element for elementary transformations (conversions) of input data into output data. The node has one or two inputs and one or two outputs. Input and output data in the node are in the form of a specific structure of data known as tokens (see below). A node table determines an arithmetic operation in the node, identifies input operands, rules of transformation of input data into output data, transmission directions and terms for returning a result per each output. The node has a unique ID which identifies the node in the node table, said ID being a row (or address) in the node table.

**Scheme.** This is a small computing graph with peaks comprising computing nodes and arcs (edges) being connections for data transmission between outputs of current nodes and inputs of next nodes. Computations in a data flow mode are advantageous because of the automatic parallelism of computations at the level of instructions (instruction level) in the course of the program. On the other hand, the computing graph representing an application is much harder to understand by a software engineer than a typical sequential algorithm, especially when such the graph is large. For this reason, the disclosure of the present invention incorporates a concept of a scheme, according to which a scheme is a logically-complete small computing graph having inputs and outputs. Schemes can be either permanently stored in a node table (see below), or dynamically loaded into the node table when called. The scheme can be created without any specific compiler because the scheme can be programmed by simply filling fields of the node table.

The scheme has several inputs and outputs. The scheme starts computations when data is provided to the inputs thereof. The computations are carried out in the data flow mode. Data is transmitted between the nodes by means of the tokens. The main difference of the computing device and the computing system of the present invention from the known devices and systems operating in the data flow mode is in that, according to the present invention, the associative memory stores only intermediate values of the computation and/or operands which currently require (wait for) a second operand. In contrast to the prior art, according to the present invention, the processed data and results are stored, preferably, not in the associative memory, but in the RAM-type memory (Random Access Memory). In particular, data addressing in the RAM-type memory is executed by means of a DataID field of an input token (see below).

**Computing matrix.** To determine algorithms, schemes can use own inputs and outputs to be integrated horizontally and vertically into a computing matrix to parallelize the computations by rows and columns. Accordingly, the DataID field of a token can be divided into two identical parts, namely a Row and a Col (Column). A second operand of an instruction can be addressed in the format of (Row,Col), and the address is detected in the RAM-type memory by means of hardware means of the computing device, for instance, by means of a module for computing linear memory addresses, while executing the instructions.

The computing matrix provides for computations in the data flow mode. Each individual element of the computing matrix is processed in parallel with the other elements by its own scheme using arithmetic and conditional statements (operations). After the scheme in a given matrix coordinate has executed the computation, the scheme transfers the computation results to the adjacent schemes. The computation result can be also transmitted to the adjacent schemes based on any condition. When the matrix activity is stopped or a special message on a current transaction is received from the matrix, it means that a computing process is finished. Also, when the computations are over, the computing device memory, in particular, the RAM-type memory, will contain the matrix operation results. These data will be either used in further computations or returned to a host processor (a master or main processor). The computing matrices are preferably integrated into a typical sequential algorithm where parallel computations, for instance, same-type computations using vector and matrix elements, are required. In this way, a host processor program will be some kind of a layered configuration consisting of linear code and schemes. In other words, the present invention allows distribution of computations both in space within the executive units of the computing device, and in time by setting with the host processor a sequence of computations in the computing device.

**Instruction.** Each row in a node table (see below) is given in the form of instructions. A row address in the node table is a node identifier (NodeID). The instruction indicates what to do with input operands and how to form results at each of the node outputs.

For example, without limiting the present invention, an instruction may comprise the following fields:

*Cmd* is a command (operator). Commands are classified as arithmetic commands (operations) with integer and real numbers, commands of comparison of integer and real numbers, commands of loading and storing to/from the RAM-type memory, sending messages to a processor that initiated a transaction. *OPL, OPR* indicate what is a left operand and what is a right operand, respectively.

◦ *Data* is a token data. If this type is specified for both node inputs, the search is performed in the associative memory.
◦ *DataID* is a token data identifier.
◦ *Memo* is data in the RAM-type memory at an address defined in the token DataID.
◦ *MemoRC* is data in the RAM-type memory by indices Row,Col defined in the token DataID.
◦ *NData* is data in the respective field NData of the node table.
◦ *None* is "No".

*NData* is a constant in the node.
*Addr* is a matrix address in the RAM-type memory undergoing the actions.
*DimR* is a number of rows in a matrix.
*DimC* is a number of columns a matrix.

For each of *OUT1* and *OUT2* outputs of a node the following fields can be defined:

◦ *NodeID* is an identifier of a node to which a result is sent.
◦ *Pos* is an operand position (Left, Right, Doesn't matter).
◦ *Data* determines what will be a data field of a resultant token. Token means an input token.

▪ *Result* is a result of a command.
▪ *Token.DataID* is the DataID field of an input token.
▪ *Token.Data* is the Data field of an input token.
▪ *InL* is token data on a left node input.
▪ *InR* is token data on a right node input.

◦ *DataID* determines a value for each of DataID.Row and DataID.Col of the resultant token. Token means an input token, for instance, *Token. DataID.Row, Token. DataID. Col, Token. TransID. Hi, TokenTransID.Lo,* wherein *Result.Hi* is a higher word of the result, *Result.Lo* is a low word of the result.
o *DirRow,DirCol* defines a direction of the token transmission by changing a value of DataID.Row and DataID.Col by -1, 0 or +1. The change of values of Row and Col fields by 1 allows the data to be transmitted to schemes of the computing matrix to process the adjacent elements of the data matrix by rows and columns.
◦ *Enable* defines the terms of token return by output:

▪ *Never* - never return a token,
▪ *Always* - always return a token,
▪ *True* -return a token, if a result of logical operation execution in a node is true,
▪ *False* -return a token, if a result of logical operation execution in a node is false,
▪ *IR* - In Range -return a token, if indices in the DataID are within the range defined in the DimR,DimC fields of the node table,
▪ *OOR* - Out Of Range -return a token, if indices in the DataID are within the range defined in the DimR,DimC fields of the node table.

IR, OOR, DirRow,DirCol - together with the DataId field serve to arrange cycles.

**Transaction.** This is a plurality of computing operations in nodes combined by a common transaction identifier. The transaction is started by directing a token (tokens) to an input (inputs) of a scheme where all computations begin. The transaction is finished when the generation of tokens with this token identifier is stopped. Transaction execution results are stored in the RAM-type memory of a computing device. The transaction is executed by a CP.

**Fragment.** This is a plurality of simultaneously running transactions. The fragment is finished when token generation and a computing process in a computing matrix are stopped. The fragment can consist of one transaction. The fragment is executed by a CP.

**Macro-node.** This is a typical procedure having parameters which are node inputs, but unlike a typical procedure, as soon as all inputs receive data, a vacant processor automatically executes a macro-node. The macro-node is implemented using a typical processor with any known architecture. It executes a sequence of instructions in accordance with an application algorithm and sets a sequence of the fragment (transactions) execution in a CP. The macro-node can have any number of inputs and outputs. Macro-node outputs are implemented by sending messages (tokens) to inputs of other macro-nodes.

**Program.** This is a computational graph with nodes that are macro-nodes and arcs (edges) that are directions of the data transmission from an output of one macro-node to an input of another macro-node.

Directing a procedure by the associative memory module means sending a package consisting of a procedure address and a list of parameter values (parameters) to any vacant EU. A service based on this EU decodes the received package, arranges the parameter values based on the parameter transmission agreement, removes an EU index from a list of vacant EUs and executes the procedure. Upon completion of the procedure, this EU places this EU index in the list of vacant EUs. In the present disclosure, the term "Service" means an application run at a CP core which listens to messages received via a network, decodes them (picks out of the message a procedure address and parameters), sends to an arbiter a message about that the CP core is currently busy, starts a procedure, waits for a return from the procedure and, upon completion of the procedure, sends to the arbiter a message about that the core is now vacant (free). The agreement is a standard of the parameter arrangement in registers or a stack (for instance, in such languages as "C" or "Pascal").

The procedure is not a graph. A procedure code is a common "control flow" code executed only at one EU, and this code initiates computations in a CP which performs computations in the data flow mode using a plurality of EUs thereof.

The procedure in this computation model is a graph node, where node inputs are parameters and node outputs are the sendings of tokens with parameter values of other procedures. By this, the coarse-grain parallelization mentioned above is implemented.

The parallelization at the level of elementary or arithmetic operations in the data flow mode is used only in a CP, which means the fine-grain parallelization.

The elementary or arithmetic operations will be described below, and for the sake of clarity such operations will be hereinafter also referred to as "operations" or "operators".

In addition to the mentioned above, instructions can serve to control the course of a transaction.

A computing device includes two or more EUs which execute operations included in the transaction. One skilled in the art will understand that the number of operations in a transaction and, accordingly, the number of graph nodes can drastically vary (for instance, be lower) from the number of available or existing EUs in the computing device. It should be understood that in this case, the maximum number of operations of this transaction that can be executed in parallel is the number that matches the number of available or existing EUs. Other operations of this transaction will be executed at the vacated EUs. If the number of EUs is higher than the number of operations of this transaction, it is obvious that not all of the EUs will execute the transaction in this computing device.

In this way, in terms of a functionality, the term "node" logically matches the term "executive unit" meaning a physical device, although, for instance, the number of nodes can vary: the number of nodes is defined by the complexity of a computing graph (in particular, by the number of operations to be executed in a specific transaction) and a program code in general, while the number of EUs in a specific computing device remains unchanged.

As mentioned above, each node has one or two inputs and one or two outputs, wherein according to the computing graph, the node outputs are connected, if necessary, to inputs of further nodes. The node comprises an operator to be executed immediately as soon as the node inputs receive all the required data, i.e. the node operates on the principle of the data readiness (in the data flow mode). The advantage of this principle is that, unlike the von Neumann architecture, the sequence of operator executions has no significance; all that matters is the presence of all necessary data at the inputs of the node where the operation is executed. This allows to automatically parallelize computations at the instruction level in the course of the program.

The "automatic parallelism of computations" or the "automatic computation parallelization" means a computation parallelization including the distribution of computations between computing devices (in particular, executive units comprised in coprocessors) without involving a software engineer, i.e. when computations do not require specific codes to be written. Indeed, if all data for a specific operator is ready, any vacant EU can be selected, and this very EU can be provided with an operator, all data required for computations by this specific operator and an address and an input ID of a further node in a computation flow (i.e. in a procedure code) whereto the result of the execution of said specific operator on said data (operands) in said vacant EU will be sent.

**Node table.** According to the present invention, a description of each node and connections between nodes are stored in a node table included in a computing device. In general, the node table comprises the following information about each node:

- a node type defining the number of node inputs,
- an operator in the node to be applied to operands (input data),
- an address of a first further node to which a computation result will be directed,
- an address of a second further node to which a computation result will be directed,
- an operand position for an operator of the first further node,
- an operand position for an operator of the second further node.

The node table can also comprise fields for each of the node outputs responsible for the transmission direction of a resultant token to the adjacent schemes. In general, for instance, the scheme can have several inputs and outputs and, accordingly, can transmit data between any computing matrix cells, not only the adjacent ones.

The purpose of fields of the node table and the presence of other fields will be described below in detail.

Preferably, the node table is located in a conventional memory, for instance, a RAM-type memory.

**Token.** Data (operands) is transferred in a computing device, e.g. between EUs, and between computing devices within a computing system by means of tokens. For example, a token can comprise the following fields:

Data is data;

NodeID is a node identifier (ID) where the data (i.e. the token) is directed to;

Type is a token type;

Pos is a position of the data in an operator: Left, Right, Doesn't Matter, Not Available. For instance, in the expression "A-B" ("A minus B"), "A" is the left operand (on the left of the operator), while "B" is the right operand;

TransID is an identifier of a transaction where this data is present;

DataID is a data identifier for a second operand. If the data is in the RAM-type memory, this is an address of the data of the second operand, and if the data is in the associative memory, a combination of {NodeID, TransID, DataID} forms a token key to search the second operand in the associative memory. Also, the second operand can be represented by any field of an input token or a constant defined in a row of the node table for the node receiving the token.

In general, the token comprises the following information:

- an identifier (or an index) of a node towards which the token is directed;
- a transaction identifier. This is used to divide transactions. For instance, in the matrix multiplication algorithm, C=A×B comprises indices [I,J] for a resultant element C[I,J]. It is a component of a token key which will be used to define a paired token (if any);
- A data identifier. It stores an address in the RAM-type memory for the second operand in "input token - RAM-type memory" operations or is a component used to search for the second operand in "input token - token" operations. Further, it is a parameter of a hash function that calculates an index of a CP core towards which the token will be directed;
- Data itself which is directed to a node, i.e. an operand;
- An operand position in a node, i.e. an input node towards which an operand is to be directed.

The purpose of the token fields and the presence of other fields will be described below in detail.

If the information about the nodes is stored in the node table, the matching device is aimed at forming two operands (operand pairs) matching each other, to execute operations with said operands in the EU.

If the node for the operator therein has only one input (i.e., the operator is executed with one operand), a corresponding token, once in the matching device, is immediately forwarded directly to the EU selected to execute this operator.

Tokens waiting for their paired tokens to carry out operators executed on them (i.e., such operators which are executed on two operands) are preferably located in the associative memory which is a component of the matching device.

The token fields of "Identifier Node", "Transaction Identifier", and "Data Identifier" form the token key based on which the matching device searches for a paired token for a newly received token. Before writing said newly received token into the associative memory, the matching device checks whether the associative memory already comprises a token with the same key as of the newly received token, i.e. a paired token.

If the paired token is not found in the associative memory, the newly received token is written into the associative memory. If the paired token already exists in the associative memory, the matching device forms a data structure consisted of the newly received token and the data field of the paired token stored in the associative memory. The node identifier field of this structure stores a row address in the node table comprising all necessary information about further operation and rules for formation an output token. When the matching device forms a pair of operands and an operator (and the additional information including an address of next EUs to direct a result and a data identifier thereto), the computing device selects a free EU, and the formed data structure is transmitted to this selected EU to execute the operator, and the paired token stored in the associative memory is deleted therefrom, unless otherwise stated.

In accordance with the present invention, provided is the following alternative embodiment of allocation of the data waiting for their paired tokens to execute operators on them.

It is known that the hardware associative memory is energy consuming and difficult to make, because, in addition to a key and data, each cell of such memory comprises a comparator for simultaneous parallel key-based search for data in all memory cells. Therefore, it is extremely inefficient and expensive to store large volumes of data, e.g. data arrays, in the associative memory. On the other hand, the typical RAM-type memory can store at least a portion of this data if it is known that this data is available and correct for further computations (for instance, it remains unchanged for some time). In this' case, the matching device can comprise both the associative memory and the RAM-type memory. In this way, the required volume of the associative memory can be reduced significantly. Thus, the associative memory will store only a small number of unpaired tokens required for current computations with the automatic parallelism, while the rest of the data being processed will be stored in the RAM-type memory. It should be noted that the RAM-type memory stores only data and does not store tokens.

In order to achieve said alternative allocation of the second operand, the node table comprises fields indicating which one of the operands is left and which one is right. Values in MEMO and MEMORC fields indicate that the second operand is in the RAM-type memory of the matching device. In fact, this node will be of "mono input" type (i.e. has a single input), because the second operand will be selected not from the associative memory, rather from the RAM-type memory of the matching device based on the address indicated in the field of "Data Identifier" (DataID field) of the token. Accordingly, the operation result can be stored in the associative memory or in the RAM-type memory of the matching device. Unlike the embodiment where data is stored in the associative memory, when data is stored in the RAM-type memory of the matching device, a paired token is unsearchable.

When the operator is executed, the executive unit forms result tokens and sends them to the matching device of the core prescribed by the value in the field "Data Identifier".

**Operation, operator.** In general, an operation, or an operator, can be any arithmetic or elementary operation executed on one or two operands. In particular, the operator can be an arithmetic operator of addition, subtraction, multiplication, division, squaring, square rooting, etc. The operator can be an integer to real, real to integer, etc. conversion operator. Also, the operator can be an operator of comparison between integers and/or real numbers, such as "equal to", "not equal to", "greater than", "less than", "greater than or equal to", "less than or equal to". The operator can be a duplication function (or a splitter function), when, for instance, the same operand has to be directed in the form of input data to two or more nodes. Furthermore, the operator can be a service message directed to a processor. One skilled in the art should understand that the operator to be executed in the EU is not limited by mentioned above exemplary types and can be any operator executable on one or two operands or used for service purposes (for instance, to transmit the service information to a processor or to another component of the computing system).

The computing device comprises a network controller to combine several computing devices into a network. Several computing devices combined into a network can operate together. To ensure maximum efficiency of both the individual computing device and a computing system (see below) it is required to observe the following conditions:

- To distribute evenly tokens transmitted to different computing devices, loading as many EUs as possible;
- To direct tokens with identical keys to the same computing device, otherwise the paired tokens will never meet each other;
- In order to determine an ID of a computing device towards which a token is to be directed, a hash function is used that has to operate as evenly as possible, preventing the queue overflow in any of the computing devices. The hash function uses the token key to determine an ID of the required computing device towards which the token is to be directed. In its turn, the token key consists of a node ID and a context, wherein the context identifies a pair of data of an operator in the node having this ID. Each computing device has its own hash function calculator, but the hash function calculators of the computing system calculate the same hash function using a token key as an argument. The evenly operating hash function means that the token will be directed with an essentially equal probability to any of the computing devices of the computing system, thus reducing the risk that sent tokens will load mostly a small number of the computing devices while the rest of the computing devices will idle;
- The content of the node table of each computing device has to be the same, i.e. the node tables of the computing devices combined into one network have to be identical.

One computing device or several networked computing devices connected to one or more processors form a computing system cluster. The computing system itself can consist of one or more clusters.

Processors of the computing system cluster can be of any type known in the prior art. Preferably, each processor has a small separate memory with a zero waiting cycle to store local variables of a procedure from a code of a program stored in the processor's RAM-type memory, and a separate memory to store processor instructions. The instruction memory of all processors comprises the same code downloaded from the same address which is processor procedures that can operate in parallel. In such architecture, caches for processor instructions and data in a cluster are unnecessary. Now, all computing devices substantially share the associative memory, and the total performance of the computing system is dependent basically on a data network transmission rate, thus addressing the "memory wall" problem because for such computing system this problem is just irrelevant. Consequently, at a high enough network speed, the total performance of the computing system will increase almost linearly with an increase in the number of the clusters.

One of the clusters in the computing system is a lead cluster and, preferably, is a symmetric multiprocessing system (SMP-system) which loads components of the computing system and executes a program.

The present invention provides the following advantages over the known computing systems and architectures with parallel computations:

- Data flows can be created and destroyed without the use of an operating system;
- Local data of a procedure belongs only to this procedure. Consequently, no coherence of the data cache is required. A computing system can be built without any data cache;

- Since local data requires very small memory, such data can be stored in each processor of a computing system using a small high-speed memory without any cache memory. Global procedure data, i.e. data common for all procedures, is stored in a computing device, and local data is available only for a current launched procedure. The local data is in a stack frame of the current procedure and can be accessed only by this procedure. Even two identical (with the same address) procedures in progress will have different sets of local data;

- The deadlock and "memory wall" problem is addressed because physically the RAM-type memory of a CP core belongs only to this core which excludes competitive access to this memory by another CP core. The aggregated memory of all CP cores logically will be a common address space. The computation speed is limited only by a bandwidth and speed of a network combining computing devices or clusters;

- Simple scaling of a computing system;

- Traditional programming.

Possible embodiments of the present invention, which however do not limit implementation thereof, will be described in detail below with references to the accompanying drawings.

Fig. 1 shows a first embodiment of a computing device according to the present invention.

Fig. 2 shows a second embodiment of a computing device according to the present invention.

Fig. 3 shows an exemplary embodiment of a computing system according to the present invention.

Fig. 4 shows a schematic representation of a computation principle according to the present invention.

Fig. 5 shows a schematic representation of an example of the fine-grain parallelization to find the roots of a quadratic equation according to the first embodiment of the computing device.

Fig. 6 shows an embodiment of a node table for the example of finding the roots of a quadratic equation of Fig. 4.

Fig.7 shows a schematic representation of the fine-grain parallelization of adding (summing) matrix elements according to the second embodiment of a computing device.

Fig. 8 shows yet another variant of a node table for the example of adding (summing) matrix elements and respective start tokens, wherein the matrix elements are stored in the RAM-type memory.

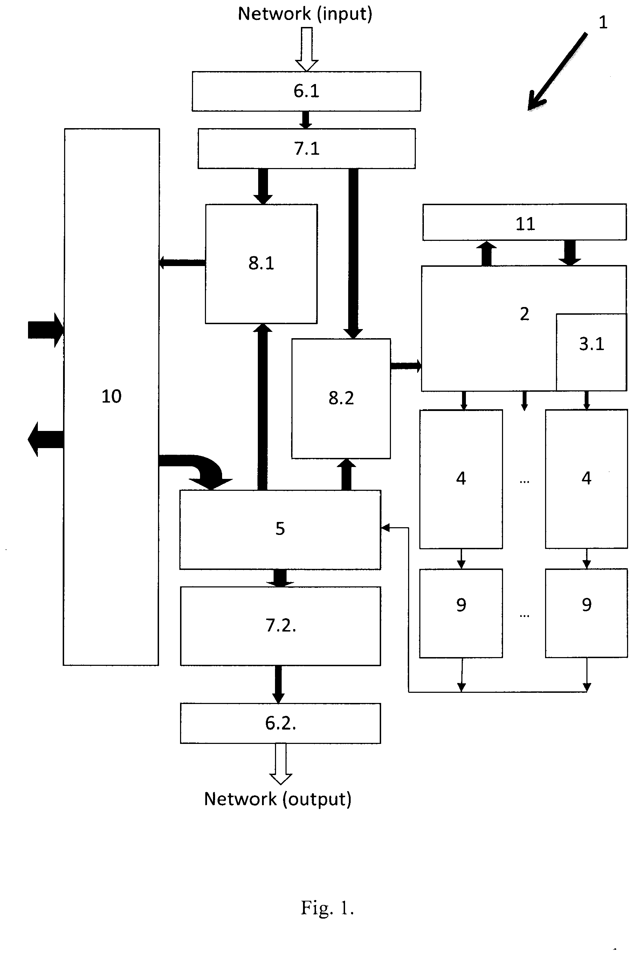

In general, and according to the first embodiment shown in Fig. 1, a computing device 1 includes a matching device 2 comprising an associative memory 3.1, at least one executive unit 4 (EU 4), a demultiplexer 5, an input network controller 6.1 and an output network controller 6.2, a message decoder 7.1 and a message encoder 7.2, a message queue 8.1 and a token queue 8.2, one or several message and token generators 9, an external device interface 10, and a node table 11.

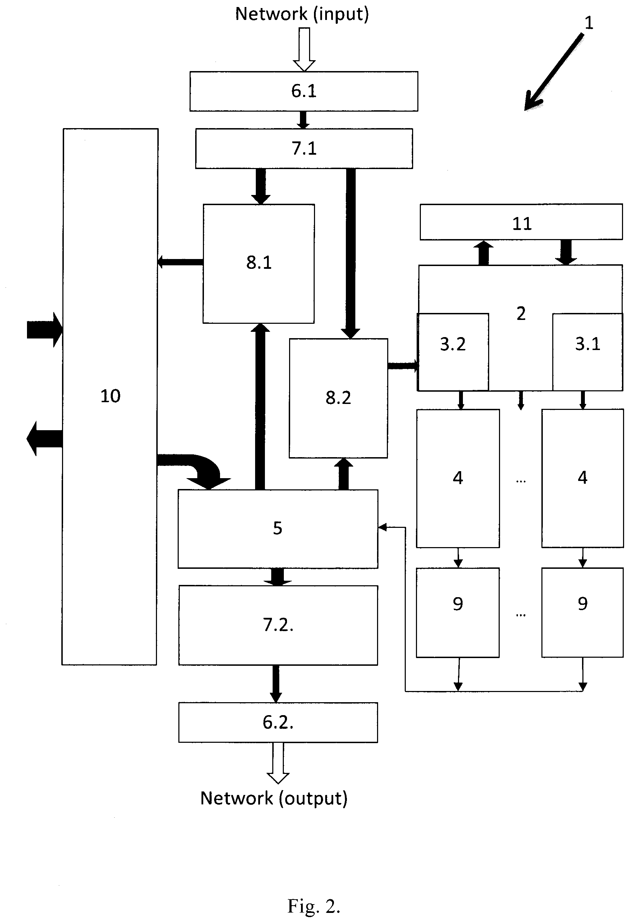

According to the second embodiment shown in Fig. 2, the computing device 1 is different from the first embodiment (Fig. 1) in that it additionally comprises a RAM-type memory 3.2 (or any similar memory), which is, according to a specific embodiment shown in Fig. 2, a component of the matching device 2 together with the associative memory 3.1. Apart from that, said first and second embodiments of the computing device 1 are similar.

A major problem of devices operating on the principle of a data flow (data flow mode) including said above known technical solutions is the need to use a hardware associative memory of large volume. This type of memory is energy consumptive and is difficult-to-make. Therefore, it is extremely inefficient and expensive to store large data, for instance data arrays, in the associative memory. This data can be stored in a conventional random access memory, or RAM-type memory, if it is known that this data is available and correct for further computations. In this way, the required capacity of the associative memory 3.1, which has been already minimized according to the embodiment of the computing device 1 according to the present invention shown in Fig.1, can be significantly reduced. The RAM-type memory 3.2 (Fig. 2) can store only small number of unpaired tokens required in the current computations to ensure the automatic parallelism.

Here it should be noted that, unlike data stored in the associative memory 3.1, when certain data is stored in the RAM-type memory 3.2 a pair for this data will not be searched for.

In addition, the computing device can comprise elements not shown in Figs.1, 2, such as a hash function control register comprising information about the total number of computing devices in a computing system and calculating a hash function; a context register comprising information to be placed into a context field of a written token; an index register of a computing device towards which a processor directs data; a status register comprising service information, in particular the information about that a message queue is not empty; a module for computing linear memory addresses, in particular, to implement the second embodiment of the computing device according to Fig. 2.

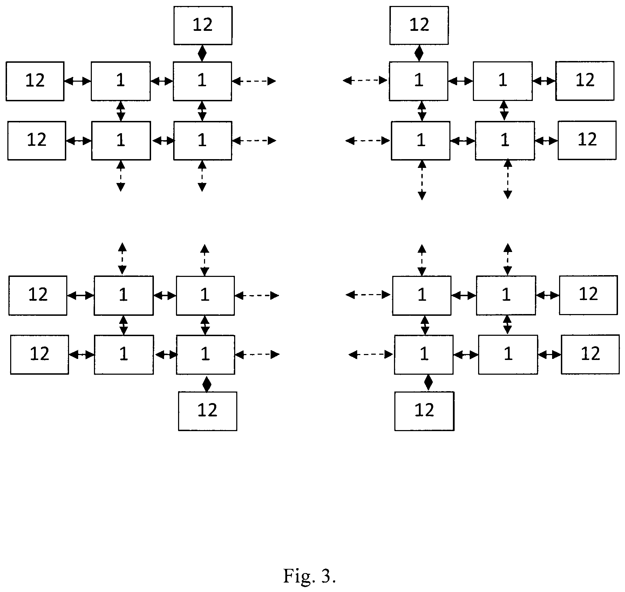

Fig. 3 shows an embodiment of a computing system based on a plurality of processors 12 and computing devices 1 connected into several clusters. In particular, Fig. 3 shows four clusters, each of which comprises three processors 12 and four computing devices 1. These clusters are interconnected into one computing system. The transmission between the computing devices 1 is conducted by receiving and sending tokens using the input network controller 6.1 and the output network controller 6.2 of each of the computing devices 1.

Referring back to Figs. 1, 2, the EUs 4 are intended to execute operators on data (operands) of one or two tokens, where an operator, as mentioned above, can be any arithmetic, elementary or service operation on one or two operands.

The information about nodes and connections therebetween used to form and transmit tokens to the EUs 4 is stored in the node table 11.

The matching device 2 selects an input token from a queue, and using a predetermined input token field (Node_ID field) selects therefrom a row containing a node description from the node table 11. The node description is used by the matching device 2 to determine whether or not a paired token needs to be searched for.

If the paired token needs to be searched for, according to the first embodiment of the computing device 1 (Fig. 1) this search takes place in the associative memory 3.1. When the paired token is found, the resulted token pair along with the key and the node description key is transmitted to a vacant EU 4 for execution, and said found paired token is deleted from the associative memory 3.1 (if it is not forbidden). If the paired token is not found in the associative memory 3.1, the input token is just written into the associative memory 3.1.

According to the second embodiment of the computing device 1 (Fig. 2), the paired token can be stored in the RAM-type memory 3.2 which provides for the following additional advantages.

Parallel computations in the data flow mode are advantageous because of the automatic parallelism of computations at the instruction level in the course of executing an application. On the other hand, a computing graph that represents a data flow algorithm is much less understandable to a software engineer than a typical sequential algorithm, especially when this graph is large. Further, the concept of "scheme" will be introduced and used for the sake of convenience and better understanding of the invention.

A scheme is some kind of a "black box" with inputs and outputs that converts input data into output data. Substantially, the scheme is a small closed (completed) computational graph. When all output data appear as the result of the scheme, this means that the scheme computation executed during computations based on the data readiness principle is completed.

Upon computation completion, the results of such scheme can be loaded into the RAM-type memory 3.2 of the computing device 1, i.e. the RAM-type memory 3.2 will contain data to be used for further computations or transmitted to the adjacent schemes. The schemes can be stored permanently in the node table 11 or can be dynamically loaded into the node table 11 prior the activation thereof. It is practical to integrate the schemes into a typical sequential algorithm where parallel computations, for instance same-type computations using vector or matrix elements, are required. Accordingly, a program will be some kind of a layered configuration of a linear code and schemes, thus greatly facilitating parallelization of a complex algorithm.

The message decoder 7.1 decodes data inputted via the network and distributes thereof among queues of input tokens and messages.

If the input token does not require a paired token, the data of the input token along with a respective row of the node table 11 and the key will be just forwarded (or transmitted) to the EU 4 for execution. The result of the operation executed in this EU 4 along with the key, the row of the node table 11, and additional parameters, if any, are then transmitted to the message and token generator 9.

The message and token generator 9 receives the result from the EU 4 along with the context and the row of the corresponding node from the node table 11. The message and token generator 9 uses the received data and generates one or several tokens or message, and then sends them to the demultiplexer 5 managed by the hash function.

If a computation error occurs (for instance, division by zero), the message and token generator 9 generates a message with an error code and accompanying data, if any, and sends this message to the computing device 1. In the computing system comprising two or more computing devices 1, all errors are directed to the same computing device 1, for instance the computing device 1 with "0" index. Said computing device 1 with the "0" index interacts with the processor 12 which is the host processor and provides communication between the computing system and the operating system. In particular, the operating system can be launched on this particular host processor. When the error occurs, the computing device 1 with the "0" index directs the error information to the host processor to enable the operating system to end the errant task in all computing devices 1 and all processors 12 of the computing system where this task has been executed, by directing thereto the respective message, for instance RESET, and directing the error information to a user.

Accordingly, by means of said computing device 1 with the "0" index, the computing devices 1 and the computing system can interact with the operating system and, consequently, with the user.

The demultiplexer 5 managed by the hash function receives from the message and token generator 9 or from the external device interface 10 a token or a message with additional parameters. If the demultiplexer 5 receives a token, then using the token DataID field and based on the parameters set in the hash function control register, the demultiplexer 5 will find an index of a CP core towards which the token is to be sent and transmit this token either to the token queue 8.2 or, together with the found index, to the message encoder 7.2. If the demultiplexer 5 receives a message, then the demultiplexer 5 generates a message for the processor 12 set in the additional parameters and sends this message to the message encoder 7.2.

The simplest hash function to find an index can be low-order bits of the DataID field.

The message encoder 7.2 generates a message to be transmitted via the network. It forms a data package containing a token or a message and a recipient core index and sends the formed data package via the output network controller 6.2 to the network.

The external device interface 10 provides for communication with the processor 12 and forms a token which the processor 12 writes down into the computing device 1 based on the input signals and the content of internal registers. The token formed according to the calculated hash function is sent either to the token queue 8.2 or in the network, for instance to another computing device 1.

Further examples show the embodiments of the present invention, in particular, the embodiments of computing methods.

Example 1.

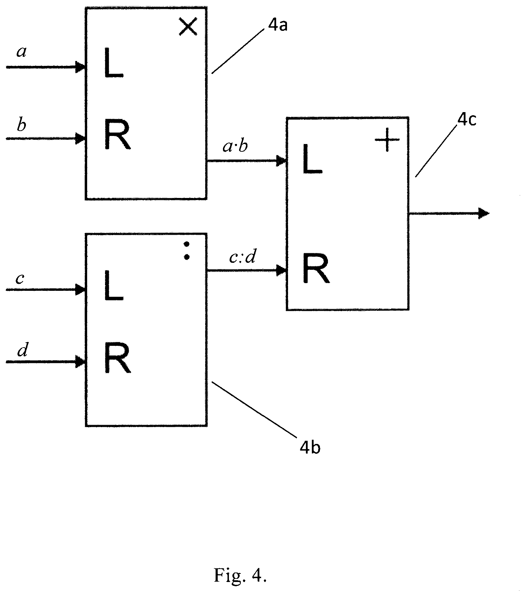

Fig. 4 shows an exemplary embodiment of computations in the data flow mode in the form of a graph, where, for the sake of convenience of understanding of the following description, nodes are designated by references 4a, 4b, 4c which appear to be indices of the nodes. According to the above said, in terms of functionality, the concept of "node" logically corresponds to the concept of "executive unit" (EU) meaning a physical device. Consequently, in this example for simplicity it will be considered that it is a EU (not a node) which actually conducts computations.

In this example, computed is the following expression:

$$a \cdot b + c{:}d,$$

where $a, b, c, d$ are input data.

Let's assume that the values of $a$ and c are available prior to the values of $b$ and $d$.

The values of $a$ and c are stored in the associative memory 3.1 or the RAM-type memory 3.2 (depending on the embodiment of the computing device 1) of the matching device 2, while waiting for the computing device 1 to receive the values of $b$ and $d$. As soon as the computing device 1 receives the value of $b,$ the matching device 2 finds the paired value thereof which is $a,$ determines a vacant node 4a (i.e. a vacant EU 4a, the equivalent of which in this example is assumed as the node 4a), forms a data set which includes, among other, the values of $a, b,$ as well as a multiplication operator which has to be applied to this pair of operands, and directs this data set to the vacant node 4a. In the associative memory 3.1 or the RAM-type memory 3.2 (depending on the embodiment of the computing device 1), the value of $a$ is deleted, unless otherwise is requested.

One of the inputs of the node 4a designated as L receives the value *of a,* and another input designated as R receives the value of $b$, the node 4a computes the value of $a \cdot b$ and directs the obtained value to the matching device 2. The node 4a thus becomes vacant. (In fact, computations are executed by the EU 4a that becomes vacant when computations are finished, i.e. EU 4a becomes ready to further receive a new data set to have operations executed on them.)

At the same time, or earlier, or later - it depends on when the computing device 1 receives the value of $d$ - the matching device 2 finds in the associative memory 3.1 or in the RAM-type memory 3.2 (depending on the embodiment of the computing device 1) the value of c, which is a pair to the value of $d$, and determines the vacant node 4b. It should be noted that at this very moment the vacant node can be the node 4a, e.g. if the computing device 1 received the value of $d$ after the node 4a had already finished computing the value of $a \cdot b,$ or if the computing device 1 received the value of $d$ before receiving the value of $b$. Important is that the data set which is full (sufficient) to execute operations thereon is directed to the currently vacant node.

To be specific, let's assume that when the data set including values of c and d was formed, the node 4a was used (EU 4a was busy with computation), and this is why the data set would be directed to the node 4b. The value of $c$ is directed to one input of the node 4b designated as L, and the value of $d$ is directed to the second input R of the node 4b. In the associative memory 3.1 or in the RAM-type memory 3.2 (depending the an embodiment of the computing device 1), the value of c is deleted, unless otherwise is required. A result obtained upon the computation of the value of $c{:}d$ is directed to the matching device 2, and the node 4b thus becomes vacant.

So, the values of $a \cdot b$ and $c{:}d$ are computed independently from each other.

As soon as the node 4a (like any other node) does not compute the value of $a \cdot b$ anymore, it can be used for further computations. It should be also noted that the node 4a is not limited to only the multiplication operation, rather it can also execute any operation indicated by the computing device 1, in particular, the operation indicated in the node table 11 for specific operands.

The node 4b operates likewise: as soon as it does not compute the value of $c{:}d$ anymore it can be used for further computations. The node 4b is not limited to only the multiplication operation, rather it can also execute any operation indicated by the computing device 1, in particular, the operation indicated in the node table 11 for specific operands.

Now, to be specific, let's assume that the node 4a had computed the value of $a \cdot b$ before the node 4b computed the value of $c{:}d,$ i.e. the value of $a \cdot b$ entered the matching device 2 before the value of $c{:}d$. When the value of $a \cdot b$ is received, the matching device 2 searches in the associative memory 3.1 or in the RAM-type memory 3.2 (depending on the embodiment of the computing device 1) for the value of $c{:}d$ and, not finding it, puts the value of $a \; b$ into the associative memory 3.1 or in the RAM-type memory 3.2, respectively (depending the an embodiment of the computing device 1). Next, as soon as the matching device 2 receives from the node 4b the computed value of *c:d,* the matching device 2 searches in the associative memory 3.1 or in the RAM-type memory 3.2 (depending the an embodiment of the computing device 1) for the computed value of *a·b,* finds it, forms a data set including a pair of computed values of *a·b* and *c:d* and an addition operator (addition, i.e. "+"), and directs this data set to the currently vacant node 4c. If the node 4a and/or the node 4b is currently a vacant node, each of them can be the node 4c. The associative memory 3.1 or the RAM-type memory 3.2, respectively, (depending on the embodiment of the computing device 1) deletes the value of *a·b,* unless otherwise is required.

The node 4c receives the data set, computes the value of the expression of *a·b + c:d* and sends it to the matching device 2.

Thus, the nodes 4a, 4b, 4c each is used independently without waiting for computations executed by the other nodes at the other steps of the procedure. As soon as the matching device 2 receives all necessary data for a specific operator to be applied thereon, the computing device 1 selects a vacant node and directs a data set thereto. When the computations are executed, said vacant node sends the received result back to the matching device 2 and becomes free.

Given the small size of the graph shown in Fig. 4, this graph can be considered as a scheme, as defined above.

Example 2.

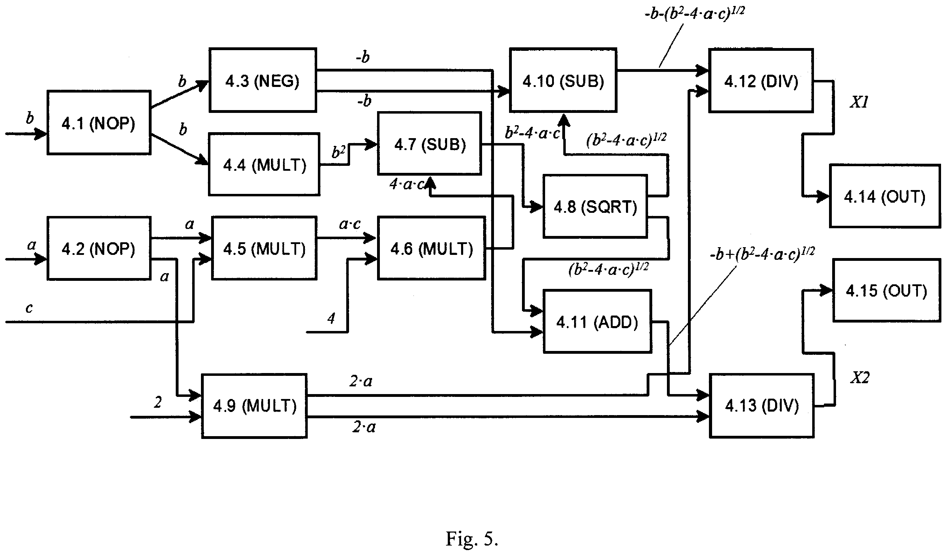

Fig. 5 shows, in the form of a graph, an example of the fine-grain parallelization to find the *X1, X2* roots of a quadratic equation

$$ ax^2 + bx + c = 0 $$

using the described above principle of computation in the data flow mode and implemented in the computing device 1 according to the present invention. Fig. 5 shows the following operator designations:

NOP is a null operator. In this case, this is an operand duplication operator, or a splitter operator;
NEG is inversion operator, or a sign changing operator;
MULT is a multiplication operator;
SUB is a subtraction operator;
SQRT is a square rooting operator;
ADD is an addition operator;
DIV is a division operator;
OUT is a result output operator.

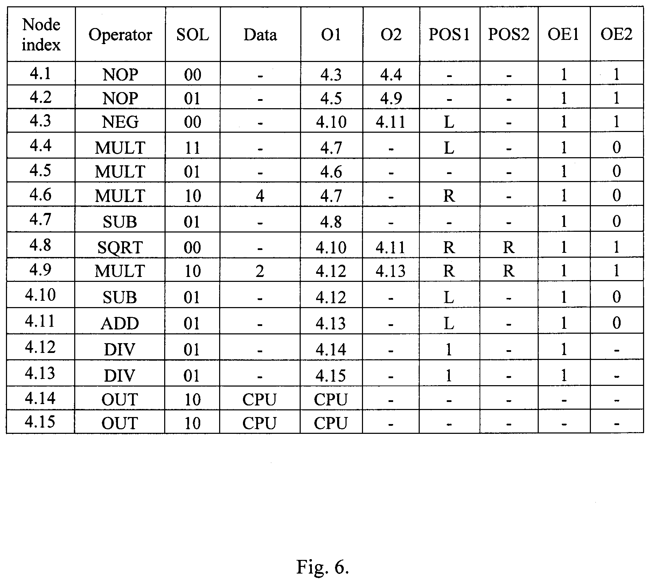

Fig. 6 shows an embodiment of filling the node table 11 according to the example of Fig. 5. In Fig. 6, operator designations correspond to the designations described above with reference to Fig. 5, and are accompanied with the following designations:

SOL is a second operand location:

00 - no second operand,
01 - the second operand is in the associative memory 3.1,
10 - the second operand is in the data field,
11 - the second operand is the first (input) operand;

O1 is an index of the first node to which the result will be sent;
O2 is an index of the second node to which the result will be sent;
POS1 is an L or R input of the next node to which the result will be sent from the first output;
POS2 is an L or R input of the next node to which the result will be sent from the second output;
OE1 is a sign of use of the node's first output:

0 - the output is not used,
1 - the output is used;

OE2 is a sign of use of the node's second output:

0 - the output is not used,
1 - the output is used;

- (a line) - no value;
CPU is a processor to which the result of the instruction (*X1, X2* roots of a quadratic equation) will be sent.

Similarly to the described above example 1 of the principle of computations in the data flow mode (Fig. 4), for simplicity it will be considered that operators are executed in nodes which are functionally similar to the EUs 4. To better understand the example, in Fig. 5 the nodes are accompanied by the designations of arithmetic operators given in brackets.

The processor 12 of the computing system transmits the values of *a, b, c* to a selected computing device 1.

The operand duplication operator in the node 4.1 (NOP) duplicates the value of *b* and directs these values to the nodes 4.3 (NEG) and 4.4 (MULT). In the node table 11 of the node 4.1 (NOP), it is said that:

- The arithmetic operator is the "null" operator (the "Operator" field has the value of "NOP"). In this case it is the duplication operator;
- The second operand is unavailable (the SOL field has the value of "00");
- The data (for instance, in the form of constants) is unavailable;

- The nodes to which the result will be sent are the nodes 4.3 and 4.4, and both outputs of the node 4.1 are used, or active (OE1, OE2 fields each has the value of "1").

The operand duplication operator in the node 4.2 (NOP) duplicates the value of *a* and sends these values to the nodes 4.5 (MULT) and 4.9 (MULT). In the node table 11 of the node 4.2 (NOP), it is said that:

- The arithmetic operator is the "null" operator (the "Operator" field has the value of "NOP"). In this case it is the duplication operator;
- The second operand is in the associative memory (the SOL field has the value of "01" or the value of "00", since the NOP operator has one input, and it does not matter which value the SOL field has);
- The data (for instance, in the form of constants) is unavailable;
- The nodes to which the result will be sent are the nodes 4.5 and 4.9, and both outputs of the node 4.1 are used, or active (OE1, OE2 fields each has the value of "1").

In the node 4.3 (NEG), the inversion operator assigns the opposite sign to the value of *b,* i.e., it forms the value of *-b* and send this result to the nodes 4.10 (SUB) and 4.11 (ADD). According to the node table 11, the result of *-b* will be send to the node 4.10 to the input L thereof (see the POS1 field).

In the node 4.4 (MULT), the operator multiplies the obtained value of b by the obtained value of *b* and sends the result of $b^2$ to the node 4.7 (SUB). The node table 11 prescribes the node 4.4 to use the first operand value (SOL field has the value of "11") as the second operand, and the result is sent to only one node (the O2 field contains a line), specifically, to the node 4.7 (see the O1 field) to the input L thereof (see the POS1 field), wherein only one output of the node 4.4 is involved (the OE2 field has the value of "0").

In the node 4.5 (MULT), the operator multiplies the obtained value *of a* by the value of *c* and directs the result of *a·c* to the node 4.6 (MULT). The node table 11 comprises the information for the node 4.5, according to which the second operand, namely the value of *c,* is located in the associative memory 3.1 (the SOL field has the value of "01"), and the result will be directed from one output (the OE2 field has the value of "0") to the input L of the node 4.6.

In the node 4.9 (MULT), the operator multiplies the obtained value of *a* by the obtained value of 2 and directs the result of *2·a* to the node 4.13 (DIV). The node table 11 comprises the information for the node 4.9, according to which the second operand, namely the constant of 2, is in the data field (the SOL field has the value of "10" ), and the result from both outputs (the OE1 and OE2 fields each has the value of "1") will be sent to the inputs R (see the POS1, POS2 fields) of the nodes 4.12, 4.13 (see the O1, O2 fields).

The node 4.6 (MULT), having obtained (probably, in advance) the value of 4 and received the result of $\alpha·c$ from the node 4.5 (MULT), multiplies and sends the result of *4·a·c* to the node 4.7 (SUB). The node table 11 comprises the information for the node 4.6, according to which the second operand, namely the constant of 4, is located in the data field (the SOL field has the value of "10"), and the result from one output (the OE2 field has the value of "0") will be sent to the input R of the node 4.6.

The node 4.7 (SUB), having obtained the value of $b^2$ from the node 4.4 (MULT) and the value of *4·a·c* from the node 4.6 (MULT), subtracts said second value from said first value and sends the result of $b^2-4·a·c$ to the node 4.8 (SQRT), to calculating a square root of $(b^2-4·a·c)^{1/2}$ and further transmitting this result to the nodes 4.10 (SUB) and 4.11 (ADD). The node table 11 comprises the information for the node 4.7, according to which the second operand, namely the result of computations in the node 4.6, is located in the associative memory (the SOL field has the value of "01"), and the result from only one output (the OE2 field has the value of "0") will be directed to any input of the node 4.8, since only one input of the node 4.8 is used. The node table 11 comprises the information for the node 4.8, according to which the second operand is unavailable (the SOL field has the value of "00"), and the result from both outputs (the OE1 and OE2 fields each has the value of "1") is directed to the inputs R (see the POS1, POS2 fields) of the nodes 4.10, 4.11 (see the 01, 02 fields).

Having received the value of $(b^2-4·a·c)^{1/2},$ the node 4.10 (SUB) substrates this value from the value of *-b* received from the node 4.3 (NEG), while the node 4.11 (ADD) adds said value to the value of *-b* received from the node 4.3 (NEG). The node 4.10 (SUB) and node 4.11 (ADD) direct their computation results to the node 4.12 (DIV) and the node 4.13 (DIV), respectively. Descriptions in the fields of the node table 11 for the nodes 4.10, 4.11 can be understood from the described above and therefore is omitted.

The nodes 4.12 (DIV) and 4.13 (DIV) divide the values of $-b-(b^2-4·a·c)^{1/2}$ and $-b+(b^2-4·a·c)^{1/2}$ received from the nodes 4.10 (SUB) and 4.11 (ADD), respectively, by the value of 2·a received from the node 4.9 (MULT). The results of the division operator in the nodes 4.12 (DIV) and 4.13 (DIV) are roots *X1* and *X2* of the quadratic equation, respectively, which are further transmitted to the node 4.14 (OUT) and the node 4.15 (OUT), respectively, where said roots are added with the service information. This service information and the value of the roots *X1* and *X2* of the quadratic equation in the form of tokens is transmitted to the computing device 1, and further to the processor 12. Descriptions in the fields of the node table 11 for the nodes 4.12, 4.13 can be understood from the described above and therefore is omitted.

The node table 11 causes the nodes 4.14 (OUT) and 4.15 (OUT) to send the values of the roots *X1, X2* of the quadratic equation to the CPU processor.

Although in the described example of computation of quadratic equation roots 15 nodes have been used, it should be understood that in terms of implementation fewer EUs 4 would be enough, and this should not cause reduction of the total computation speed.

For instance, according to the above described, the EU 4.9 corresponding to the node 4.9 (MULT) is used at the very beginning of the program where values of 2 and $a$ are multiplied. When the values of 2 and $a$ are obtained, and multiplication operations for said values are executed, and the calculated value of $2 \cdot a$ is transmitted to next nodes, the EU 4.9 corresponding to the node 4.9 (MULT) becomes vacant (free), a record of which will be written in the node table 11. Further, the computing device 1 can assign, for instance, the operation of subtraction of the value of $4 \cdot a \cdot c$ from the value of $b^2$ (the node 4.7 (SUB)) to the same EU 4.9 which has already become vacant upon the computation operation indicated in the node 4.9 (MULT), provided that by the time the value of $b^2$ from the node 4.4 (MULT) and the value of $4 \cdot a \cdot c$ from the node 4.6 (MULT) are ready, the EU 4.9 will be indeed vacant (i.e. not busy with a new calculation).

Similarly, during computations, any other vacant EU can be used multiple times. Thus, the EUs executing operations at the beginning of the program which correspond to the nodes 4.1 (NOP) and 4.2 (NOP), can be further used to execute operations corresponding to any other nodes, for instance, the nodes 4.6 (MULT), 4.7 (SUB), 4.10 (SUB), 4.11 (ADD), 4.12 (DIV) and 4.13 (DIV), 4.14 (OUT), 4.15 (OUT).

In general, the computing device 1 can comprise only one EU 4 which will execute all operations described above, although by no means this will affect the number of the nodes in the graph shown in Fig.5. In this case, the fine-grain parallelization of computations can be arranged by combining several computing devices 1 into a network to form the computing system. For instance, the node 4.1 (NOP) may be the component of the first computing device 1, the nodes 4.2 (NOP) and 4.9 (MULT) - of the second computing device 1, the nodes 4.3 (NEG), 4.4 (MULT) and 4.5 (MULT) - of the third computing device 1, and so on. This will not cause any errors because, as mentioned above, the tokens with similar keys should be sent to the same computing device 1 (otherwise the paired tokens will never meet each other), and node tables 11 of the computing devices 1 combined to one computing system by the network are identical.

Nevertheless, when using the computing devices 1 with a single EU 4, the computing system performance is to some extent defined by the rate of data transfer on the network. Therefore, it is preferable that each computing device 1 comprises two or more EUs 4. Unlike the known solutions, such as a vector processor, the EUs 4 at each given time execute different instructions (operators). Computations are carried out based on the readiness of data using the associative memory 3.1 to map the operands in accordance with the computing graph stored in the node table 11. Each row of the node table 11 contains details of the operation in the node, operation options, input operands, rules of result formation and return, sending the results to other nodes.

The graph shown in Fig. 5 is quite complex and, although it can be considered as a scheme, it is unpractical in terms of the present invention.

In the exemplary computations described above, the small amount of data is processed which, in addition, does not comprise many similar operations. Consequently, the RAM-type memory 3.2 in the computing device 1 (see Fig.2) is not mandatory, and it is possible to use only the associative memory 3.1 both to store the intermediate computational values of expressions and/or the operands which currently require the second operand and to process the data and the results.

However, in some cases, the RAM-type memory 3.2 in the computing device 1 gives important advantages during parallel computations, in particular, during different operations with vectors and matrices, i.e. during processing of large data arrays. For such particular computations, it is advantageous for the computing device 1 to comprise a module for computing linear memory addresses in the format of (Row,Col). As mentioned above, in this case the node table uses the fields for each output of the node which direct the resultant token to the adjacent schemes. In general, the scheme may have several inputs and outputs and, accordingly, can transfer the data between different cells of the computing matrix, not only between the adjacent ones.

It is preferable, if during processing of the large data arrays, the associative memory 3.1 is used not to store the data, but to store the intermediate computation results. In this case, the processed data and the results are stored in the RAM-type memory 3.2. This is one of the reasons why the token includes, preferably, the DataID field which is the identifier of the second operand data.

Besides, the structure of the token and the node table can be expanded with additional fields, if necessary.

For instance, a "Fast Result" bit can be added to the row of the node table 11 for each of the outputs. If this bit is set, and the node does not require a value of an operation result to form a token, then such token is formed immediately without waiting when the operation is finished. This makes it possible to increase the number of launched instructions per a predetermined time interval.

So, when large data arrays are required to be processed, it is preferable to use the RAM-type memory 3.2, rather than the associative memory 3.1 to store the data (although the latter is still possible). In addition, the associative memory 3.1 is preferably used to store the intermediate operational results of the schemes executed based on the data readiness. For instance, computations of multiplication (a product) of matrices require to having one cell of the associative memory 3.1 per each element of a resultant matrix. For simultaneous computation of 32 values of the resultant matrix, it is totally required 32 cells of the associative memory 3.1 to accumulate the sum of productions. In general, computations are executed between the input token data and the cell of the associative memory 3.1 addressed for the token by the index of the row of the token key. This provides for a drastic reduction of required volume of expensive, complex and energy consumptive associative memory 3.1 in the computing device 1.

According to said embodiment of the computing device 1 (Fig. 2), the instruction system allows arranging cycles and controlling the output therefrom. This means that the resultant token on each of the outputs is transmitted (or not transmitted) to the other scheme depending on a condition whether or not the indices defined in the DataID field of the output token are within predetermined ranges defined in the row of the node table. Conditional transmissions by means of conditional statements can be also used, but often they are less efficient.

To illustrate advantages of the associative memory 3.1 and the RAM-type memory 3.2 in the matching device 2, further examples of computations with the use of the computing device 1 according to Fig. 2 are described below.

Example 3.

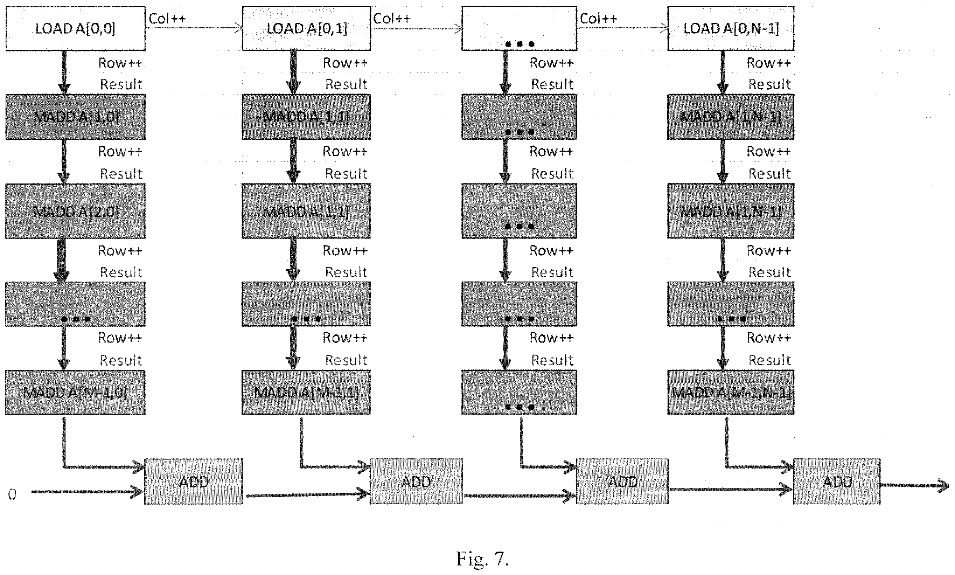

Fig. 7 shows a computing matrix for parallel computations of a sum of elements of a matrix (M, N), where the following designations are used:

A[x, y] is a matrix element in an x row and an y column;
LOADRC is an instruction responsible for loading the matrix element;
MADD A[x, y] is an instruction for adding input values (an input arrow, Result) to the matrix element in the x row and y column and for returning a result at an output (an output arrow);
ADD is an instruction for adding two values at a left input L and a right input R and for returning a result at an output (an output arrow);
Col++ is an increment of values in the Col field by one;
Row++ is an increment of values in the Row field by one.

The matrix elements are stored in the RAM-type memory 3.2.

Computations are executed in the following order.

Elements A[0, 0], A[0, 1], A[0, 2],.. A[0, N-1] of the matrix row are selected and sent (transmitted) for summing "downwards" along the column. The LOAD instruction reads the data (of specific matrix elements) from the RAM-type memory 3.2 according to the address defined in the fields [Row, Col] of the input token and forms a token according to rules defined by the instruction.

Next, the value of matrix element A[x, y] is added in each column to the value sent "from above" (Result), and the result is transmitted to the associative memory 3.1. For instance, the value of A[0, 1] is added to the value of A[0, 0] (Result) sent "from above"; the resulted value (Result) is added to the value of A[0, 2], and so on. For that, the MADD instruction sums up the input token with the RAM-type memory 3.2 content which is addressed to the fields [Row,Col] of the input token. The result of this column summing, i.e. the sum of the column elements, is written to the associative memory 3.1.

Further, the sum values of the column elements of each of the columns are summed up (the ADD instruction). The summing result for all matrix elements is written to the associative memory 3.1 or to the RAM-type memory 3.2, depending on further actions with this result according to the procedure being executed.

According to the mentioned above, the parallel computation algorithm of summing of matrix elements is carried out by means of three scheme: the first scheme being the selection of a matrix element, the second scheme being the summing of a value of the matrix element with a value "from above" (a value of the previous matrix element), and the third scheme being the summing of the obtained sums of the elements in columns. Each scheme consists of one instruction. The original data, due to a large volume thereof, are located in the RAM-type memory 3.2, and the intermediate data can be stored either in the associative memory 3.1 or in the RAM-type memory 3.2.

Example 4.

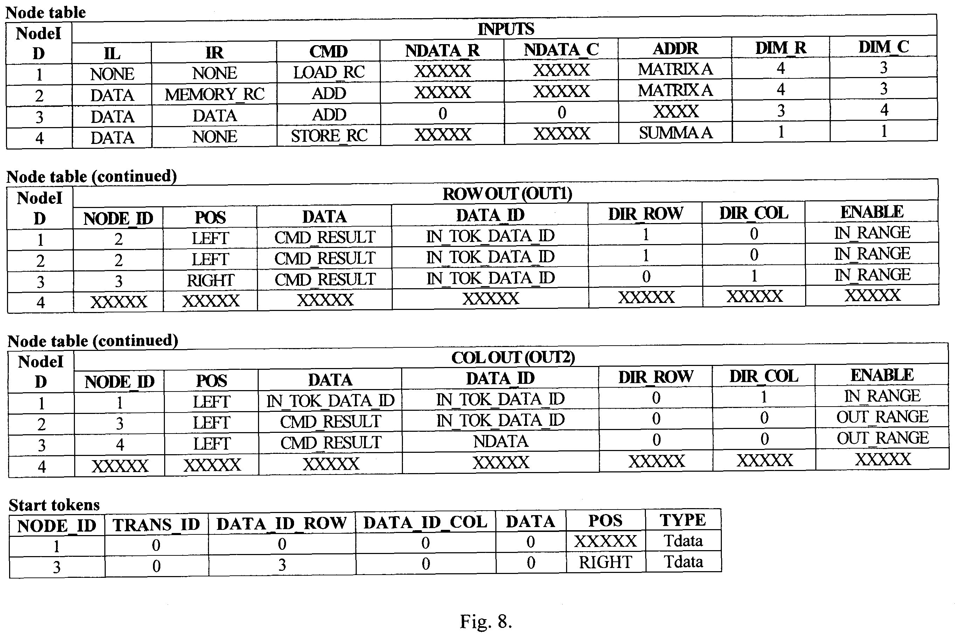

Fig. 8 shows another variant of a node table for parallelization of adding (summing) elements of a matrix (M, N) and respective start tokens, wherein the matrix elements are stored in the RAM-type memory 3.2. In addition to the above mentioned, the following designations are used in this example:

IL is a type of an operand at a left input, i.e. a left operand (similar to OPL);
NData_R is an upper portion of a field Ndata (Ndata.Row);
NData_C is a lower portion of a field Ndata (Ndata.Col);
DATA_ID_ROW is a field Row of an input token (Token.DataID.Row);
DATA_ID_COL is a field Col of an input token (Token.DataID.Col);
Tdata is a type of a token;
MEMORY_RC is the same as MemoRC;
CMD_RESULT is a result of execution of an arithmetic operation (Result);
IN_TOK_DATA_ID is a data identifier of a token (see DataID);
XXXX informs that this field is not important for executing a command.

The matrix elements are stored in the RAM-type memory 3.2.

Computation is carried out in the following order.

The computation algorithm includes calculation of sums of the elements in each row, followed by summing up said sums. The algorithm comprises four schemes, Scheme 1 to Scheme 4, each of which is given in the note table as a single row.

Scheme 1 selects each element A[1,j] from the 1-th row of the matrix using the field DataId as an address in the RAM-type memory 3.2 and transmits it down to the column j to Scheme 2 through the output OUT2 while increasing the value of the field DataID.Row of the output token by 1.

Along with that, at the output OUT1 a token is being formed which value of the field DataID.Col is increased by 1 for selecting the next element in the current row, and this token is forwarded to Scheme 1, i.e. to itself, thus forming a cycle. Exit from said cycle (i.e. finishing with generation of tokens at this output) is carried out when the value of the field DataID.Col is out of the range given in the field Dim.Col of the row of the node table for Scheme 1.

The field Addr of the node table comprises the address of the matrix A, while the fields DimR and DimC comprise the number of rows and columns of the matrix A, respectively.

Scheme 2 sums up the data coming from the "above" of the row j with the element of A[ij] and increases the value of the field DataID.Row of the result token by 1.

If the field DataID.Row of the token is not beyond the upper limit of the field DimR of the row of the node table, the result token is forwarded to Scheme 2 (i.e. to itself), thus forming a cycle for accumulating the sum. Otherwise, the token is forwarded to Scheme 3.

The field Addr of the node table comprises the address of the matrix A, while the fields DimR and DimC comprise the number of rows and columns of the matrix A, respectively.

Scheme 3 sums up the received values of the sums of each of the columns and increases the value of the field DataID. Col of the result token by 1.

If the field Data.ID. Col of the token is not beyond the upper limit of the field DimC of the column of the node table, the result token is forwarded to Scheme 3 (i.e. to itself), thus forming a cycle for accumulating the sum. Otherwise, the token with the field DataID=0 is forwarded to Scheme 4.

Scheme 4 stores the received result in the RAM-type memory 3.2 under the address SUMMA_A.

The field Addr of the node table comprises the SUMMA_A, while the fields DimR and DimC have the value 1.

Note that all intermediate results (data) are stored in the associative memory 3.1.

To launch the above described computation the host processor forwards two tokens:

- to node 1 (Scheme 1) with the field DataID=0; and
- to node 3 (Scheme 3) with the field Data=0 (initial sum), and the fields DataID.Row=N and DataID.Col=0, wherein N is the number of rows in the matrix.

While Example 3 described above can be implemented using known computing devices, though not so efficiently, Example 4 shows clear advantage of the present invention over all known computing devices and methods.

The above computing device or computing system comprising such computing devices can be implemented on any known hardware/software solution. For instance, these can be implemented by means of Programmable Logic Device (PLD). Processors can be processors with any known architecture, such as ARM, MIPS, SPARC, X86, etc.

The embodiments of the computing device disclosed above allow for implementation of various parallel computation algorithms, the general advantages of which include simple programming, no need to support the coherence of data cache and data cache availability in general, no deadlocks and "Memory Wall" problems, high speed of calculations, easy and highly-efficient scaling of the computing system.

According to the above description of the computing system, the computing device and the examples of operation principle thereof, one skilled in the art will understand that other particular embodiments of the claimed invention are possible.

**Claims**

1. A computing device (1) for execution of a procedure, in particular a procedure that may be schematically represented in the form of a graph having nodes, wherein said nodes are operators of the procedure, the computing device (1) comprising:

   - at least one executive unit (4) to execute operations on input data given in the form of tokens, wherein each of the executive units (4) is connected to a message and token generator (9) forming output data in the form of tokens,
   - a node table (11) storing a description of each node of the graph and connections between nodes which are used to form and transmit tokens to the at least one executive unit (4), the node table (11) comprising at least the following information for each node of the graph:

     ▪ a node index,
     ▪ a number of input data of the node,
     ▪ a number of output data of the node,
     ▪ an operator of the node applied by the node to the input data of the node, and at least one index of a further node to which the node, having executed the operator, sends the output data of the node,

- a matching device (2) comprising an associative memory (3.1) and configured for using the description of the nodes in the node table to store the input data, to search for the input data, and to send to the executive units (4) the input data specifically intended for these executive units (4),
- a message queue (8.1) and a token queue (8.2),
- a demultiplexer (5),
- an input network controller (6.1) and an output network controller (6.2),
- a message decoder (7.1) and a message encoder (7.2), and
- an external device interface (10).

2. The computing device (1) according to claim 1, wherein the matching device (2) further comprises a RAM-type memory (3.2).

3. The computing device (1) according to claim 2, further comprising a module for computing linear memory addresses.

4. The computing device according to any one of claims 1 to 3, which is arranged for storing processed data and results not in the associative memory, but in RAM-type memory.

5. The computing device according to any one of claims 1 to 4, wherein the node table is stored in a RAM-type memory.

6. A computing system comprising one or more clusters combined into a network, wherein each of the clusters includes:

   one or more computing devices (1) according to any of claims 1 to 5 combined into the network, and one or more processors (12), wherein the node tables (11) in the clusters are identical.

7. A method of execution of a procedure on a computing device (1), wherein the procedure may be schematically represented in the form of a graph having nodes, said nodes being operators of the procedure, the computing device (1) comprising:

   - at least one executive unit (4) to execute operations on input data given in the form of tokens, wherein each of the executive units (4) is connected to a message and token generator (9) forming output data in the form of tokens,

- a matching device (2) comprising an associative memory (3.1) and configured to store the input data, to search for the input data, and to send to the executive units (4) the input data specifically intended for these executive units (4),
- a message queue (8.1) and a token queue (8.2),
- a demultiplexer (5),
- an input network controller (6.1) and an output network controller (6.2),
- a message decoder (7.1) and a message encoder (7.2), and
- an external device interface (10),

the method comprising the following steps:

- forming a node table (11) storing a description of each node of the graph and connections between nodes wherein the node table comprises at least the following information for each node of the graph:

  ▪ an index of the node,
  ▪ a number of input data of the node,
  ▪ a number of output data of the node,
  ▪ an operator of the node applied by the node to the input data of the node, and at least one index of a further node to which the node, having executed the operator, sends the output data of the node, and

- causing the matching device (2) to use the description of the nodes in the node table (11) for sending for each node of the graph in accordance with the graph data to the at least one executive unit (4) for executing the operator of this node on the sent data, wherein the sent data is formed in the form of tokens comprising at least:

  ▪ the index of the node to which the token is sent,
  ▪ operands to which the operator of the node will be applied,
  ▪ a context defining the presence of a paired token, and
  ▪ a data identifier for a second operand,

wherein at least intermediate output data of the node is stored in the associative memory (3.1).

8. The method of execution of a procedure according to claim 7, wherein at least initial procedure data is stored in the RAM-type memory (3.2).

9. The method of execution of a procedure according to claim 7 or 8, wherein the graph is divided into one or more smaller graphs executable simultaneously.

**Patentansprüche**

1. Rechenvorrichtung (1) zum Ausführen einer Prozedur, insbesondere einer Prozedur, die schematisch in Form eines Graphen mit Knoten dargestellt werden kann, wobei die Knoten Operatoren der Prozedur sind, wobei die Rechenvorrichtung (1) umfasst:

   - mindestens eine Ausführungseinheit (4) zum Ausführen von Operationen an in Form von Token gegebenen Eingangsdaten, wobei jede der Ausführungseinheiten (4) mit einem Nachrichten- und Token-Generator (9) verbunden ist, der Ausgangsdaten in Form von Token bildet,
   - eine Knotentabelle (11), die eine Beschreibung jedes Knotens des Graphen und Verbindungen zwischen Knoten speichert, die verwendet werden, um Token zu bilden und an die mindestens eine Ausführungseinheit (4) zu übertragen, wobei die Knotentabelle (11) mindestens die folgenden Informationen für jeden Knoten des Graphen umfasst

      ■ einen Knotenindex,
      ■ eine Anzahl von Eingangsdaten des Knotens,
      ■ eine Anzahl von Ausgabedaten des Knotens,
      ■ einen Operator des Knotens, der von dem Knoten auf die Eingangsdaten des Knotens angewandt wird, und mindestens einen Index eines weiteren Knotens, an den der Knoten, nachdem er den Operator ausgeführt hat, die Ausgangsdaten des Knotens sendet,

   - eine Anpassungsvorrichtung (2), die einen Assoziativspeicher (3.1) umfasst und eingerichtet ist, um die Beschreibung der Knoten in der Knotentabelle zu verwenden, um die Eingabedaten zu speichern, nach den Eingabedaten zu suchen und den Ausführungseinheiten (4) die speziell für diese Ausführungseinheiten (4) bestimmten Eingabedaten zu senden,
   - eine Nachrichtenwarteschlange (8.1) und eine Token-Warteschlange (8.2),
   - einen Demultiplexer (5),
   - eine Eingangsnetzsteuerung (6.1) und eine Ausgangsnetzsteuerung (6.2),
   - einem Nachrichten-Decoder (7.1) und einem Nachrichtenkodierer (7.2), und
   - eine Schnittstelle (10) für externe Geräte.

2. Rechenvorrichtung (1) nach Anspruch 1, wobei die Anpassungsvorrichtung (2) ferner einen RAM-Typ-Speicher (3.2) umfasst.

3. Rechenvorrichtung (1) nach Anspruch 2, ferner ein Modul zur Berechnung linearer Speicheradressen umfassend.

4. Rechenvorrichtung nach einem der Ansprüche 1 bis 3, die dazu vorgesehen ist, verarbeitete Daten und Ergebnisse nicht in dem Assoziativspeicher, sondern im RAM-Typ-Speicher zu speichern.

5. Recheneinrichtung nach einem der Ansprüche 1 bis 4, wobei die Knotentabelle in einem RAM-Typ-Speicher gespeichert ist.

6. Rechensystem umfassend ein oder mehrere Cluster, die zu einem Netzwerk kombiniert sind, wobei jeder der Cluster umfasst:

   eine oder mehrere Rechenvorrichtungen (1) nach einem der Ansprüche 1 bis 5, die in dem Netzwerk kombiniert sind, und einen oder mehrere Prozessoren (12),
   wobei die Knotentabellen (11) in den Clustern identisch sind.

7. Verfahren zum Ausführen einer Prozedur auf einer Rechenvorrichtung (1), wobei die Prozedur schematisch in Form eines Graphen mit Knoten dargestellt werden kann, wobei die Knoten Operatoren der Prozedur sind, wobei die Rechenvorrichtung (1) umfasst:

   - mindestens eine Ausführungseinheit (4) zum Ausführen von Operationen an in Form von Token gegebenen Eingangsdaten, wobei jede der Ausführungseinheiten (4) mit einem Nachrichten- und Token-Generator (9) verbunden ist, der Ausgangsdaten in Form von Token bildet,
   - eine Anpassungsvorrichtung (2), die einen Assoziativspeicher (3.1) umfasst und eingerichtet ist, um die Eingabedaten zu speichern, die Eingabedaten zu suchen und den Ausführungseinheiten (4) die speziell für diese Ausführungseinheiten (4) bestimmten Eingabedaten zu senden,
   - eine Nachrichtenwarteschlange (8.1) und eine Token-Warteschlange (8.2),
   - einen Demultiplexer (5),
   - eine Eingangsnetzsteuerung (6.1) und eine Ausgangsnetzsteuerung (6.2),
   - einem Nachrichten-Decoder (7.1) und einem Nachrichtenkodierer (7.2), und
   - eine Schnittstelle (10) für externe Geräte,

   das Verfahren umfassend die folgenden Schritte:

   - Bilden einer Knotentabelle (11), die eine Beschreibung jedes Knotens des Graphen und Verbindungen zwischen den Knoten speichert, wobei die Knotentabelle für jeden Knoten des Graphen mindestens die folgenden Informationen umfasst:

- einen Index des Knotens,
- eine Anzahl von Eingangsdaten des Knotens,
- eine Anzahl von Ausgabedaten des Knotens,
- einen Operator des Knotens, der von dem Knoten auf die Eingangsdaten des Knotens angewandt wird, und mindestens einen Index eines weiteren Knotens, an den der Knoten, nachdem er den Operator ausgeführt hat, die Ausgangsdaten des Knotens sendet, und

- Veranlassen der Anpassungsvorrichtung (2), die Beschreibung der Knoten in der Knotentabelle (11) zu verwenden, um für jeden Knoten des Graphen in Übereinstimmung mit den Graphdaten an die mindestens eine Ausführungseinheit (4) zu senden, um den Operator dieses Knotens auf die gesendeten Daten anzuwenden, wobei die gesendeten Daten in Form von Token gebildet werden/sind, die mindestens umfassen:

- den Index des Knotens, an den das Token gesendet wird,
- Operanden, auf die der Operator des Knotens angewendet werden soll,
- einen Kontext, der das Vorhandensein eines gepaarten Tokens definiert, und
- einen Datenidentifizierer für einen zweiten Operanden,

wobei zumindest Zwischenausgangsdaten des Knotens in dem Assoziativspeicher (3.1) gespeichert sind/werden.

8. Verfahren zum Ausführen einer Prozedur nach Anspruch 7, wobei zumindest anfängliche Prozedurdaten in dem RAM-Typ-Speicher (3.2) gespeichert sind/werden.

9. Verfahren zum Ausführen einer Prozedur nach Anspruch 7 oder 8, bei dem der Graph in einen oder mehrere kleinere, gleichzeitig ausführbare Graphen unterteilt ist/wird.


**Revendications**

1. Dispositif informatique (1) pour l'exécution d'une procédure, en particulier une procédure qui peut être représentée schématiquement sous la forme d'un graphe ayant des noeuds, lesdits noeuds étant des opérateurs de la procédure, le dispositif informatique (1) comprenant :

- au moins une unité d'exécution (4) pour exécuter des opérations sur des données d'entrée fournies sous la forme de jetons, chacune des unités d'exécution (4) étant connectée à un générateur de messages et de jetons (9) formant des données de sortie sous la forme de jetons,
- une table des noeuds (11) stockant une description de chaque noeud du graphe et de liaisons entre noeuds utilisées pour former et transmettre des jetons à l'au moins une unité d'exécution (4), la table des noeuds (11) comprenant au moins les informations suivantes pour chaque noeud du graphe :

- un indice de noeud,
- un nombre de données d'entrée du noeud,
- un nombre de données de sortie du noeud,
- un opérateur du noeud appliqué par le noeud aux données d'entrée du noeud, et au moins un indice d'un autre noeud auquel le noeud, après avoir exécuté l'opérateur, envoie les données de sortie du noeud,

- un dispositif d'appariement (2) comprenant une mémoire associative (3.1) et configuré pour utiliser la description des noeuds dans la table des noeuds pour stocker les données d'entrée, de rechercher les données d'entrée et d'envoyer aux unités d'exécution (4) les données d'entrée spécifiquement destinées à ces unités exécutions (4),
- une file d'attente de messages (8.1) et une file d'attente de jetons (8.2),
- un démultiplexeur (5),
- un contrôleur de réseau d'entrée (6.1) et un contrôleur de réseau de sortie (6.2),
- un décodeur de messages (7.1) et un codeur de messages (7.2), et
- une interface de dispositif externe (10).

2. Dispositif informatique (1) selon la revendication 1, dans lequel le dispositif d'appariement (2) comprend en outre une mémoire de type RAM (3.2).

3. Dispositif informatique (1) selon la revendication 2, comprenant en outre un module pour calculer des adresses de mémoire linéaires.

4. Dispositif informatique selon l'une quelconque des revendications 1 à 3, qui est agencé pour stocker les données traitées et les résultats non pas dans la mémoire associative, mais dans de la mémoire de type RAM.

5. Dispositif informatique selon l'une quelconque des revendications 1 à 4, dans lequel la table des noeuds est stockée dans une mémoire de type RAM.

**6.** Système informatique comprenant un ou plusieurs clusters combinés en un réseau, dans lequel chacun des clusters comprend :

un ou plusieurs dispositifs informatiques (1) selon l'une des revendications 1 à 5 combinés dans le réseau, et un ou plusieurs processeurs (12),
dans lequel les tables de noeuds (11) dans les clusters sont identiques.

**7.** Procédé d'exécution d'une procédure sur un dispositif informatique (1), dans lequel la procédure peut être représentée schématiquement sous la forme d'un graphe ayant des noeuds, lesdits noeuds étant des opérateurs de la procédure, le dispositif informatique (1) comprenant :

- au moins une unité d'exécution (4) pour exécuter des opérations sur des données d'entrée fournies sous la forme de jetons, chacune des unités d'exécution (4) étant connectée à un générateur de messages et de jetons (9) formant des données de sortie sous la forme de jetons,
- un dispositif d'appariement (2) comprenant une mémoire associative (3.1) et configuré pour stocker les données d'entrée, pour rechercher les données d'entrée et pour envoyer aux unités d'exécution (4) les données d'entrée spécifiquement destinées à ces unités d'exécution (4),
- une file d'attente de messages (8.1) et une file d'attente de jetons (8.2),
- un démultiplexeur (5),
- un contrôleur de réseau d'entrée (6.1) et un contrôleur de réseau de sortie (6.2),
- un décodeur de messages (7.1) et un codeur de messages (7.2), et
- une interface de dispositif externe (10),

le procédé comprenant les étapes suivantes :

- former une table des noeuds (11) stockant une description de chaque noeud du graphe et de liaisons entre noeuds, la table de noeuds comprenant au moins les informations suivantes pour chaque noeud du graphe :

▪ un index du noeud,
▪ un nombre de données d'entrée du noeud,
▪ un nombre de données de sortie du noeud,
▪ un opérateur du noeud appliqué par le noeud aux données d'entrée du noeud, et au moins un index d'un autre noeud auquel le noeud, après avoir exécuté l'opérateur, envoie les données de sortie du noeud, et

- faire utiliser par le dispositif d'appariement (2) la description des noeuds dans la table des noeuds (11) pour envoyer, pour chaque noeud du graphe conformément au graphe, des données à l'au moins une unité d'exécution (4) pour exécuter l'opérateur de ce noeud sur les données envoyées, les données envoyées étant formées sous la forme de jetons comprenant au moins :

▪ l'index du noeud auquel le jeton est envoyé,
▪ les opérandes auxquels l'opérateur du noeud sera appliqué,
▪ un contexte définissant la présence d'un jeton apparié, et
▪ un identificateur de données pour un deuxième opérande,

dans lequel au moins des données de sortie intermédiaires du noeud sont stockées dans la mémoire associative (3.1).

**8.** Procédé d'exécution d'une procédure selon la revendication 7, dans lequel au moins les données initiales de la procédure sont stockées dans la mémoire de type RAM (3.2).

**9.** Procédé d'exécution d'une procédure selon la revendication 7 ou 8, dans lequel le graphe est divisé en un ou plusieurs graphes plus petits exécutables simultanément.

Network (input)

Fig. 1.

Fig. 2.

Fig. 3.

Fig. 4.

Fig. 5.

EP 3 953 815 B1

| Node index | Operator | SOL | Data | O1 | O2 | POS1 | POS2 | OE1 | OE2 |
|---|---|---|---|---|---|---|---|---|---|
| 4.1 | NOP | 00 | - | 4.3 | 4.4 | - | - | 1 | 1 |
| 4.2 | NOP | 01 | - | 4.5 | 4.9 | - | - | 1 | 1 |
| 4.3 | NEG | 00 | - | 4.10 | 4.11 | L | - | 1 | 1 |
| 4.4 | MULT | 11 | - | 4.7 | - | L | - | 1 | 0 |
| 4.5 | MULT | 01 | - | 4.6 | - | - | - | 1 | 0 |
| 4.6 | MULT | 10 | 4 | 4.7 | - | R | - | 1 | 0 |
| 4.7 | SUB | 01 | - | 4.8 | - | - | - | 1 | 0 |
| 4.8 | SQRT | 00 | - | 4.10 | 4.11 | R | R | 1 | 1 |
| 4.9 | MULT | 10 | 2 | 4.12 | 4.13 | R | R | 1 | 1 |
| 4.10 | SUB | 01 | - | 4.12 | - | L | - | 1 | 0 |
| 4.11 | ADD | 01 | - | 4.13 | - | L | - | 1 | 0 |
| 4.12 | DIV | 01 | - | 4.14 | - | 1 | - | 1 | - |
| 4.13 | DIV | 01 | - | 4.15 | - | 1 | - | 1 | - |
| 4.14 | OUT | 10 | CPU | CPU | - | - | - | - | - |
| 4.15 | OUT | 10 | CPU | CPU | - | - | - | - | - |

Fig. 6.

Fig. 7.

EP 3 953 815 B1

**Node table**

| NodeID | INPUTS | | | | | | | |
|---|---|---|---|---|---|---|---|---|
| | IL | IR | CMD | NDATA_R | NDATA_C | ADDR | DIM_R | DIM_C |
| 1 | NONE | NONE | LOAD_RC | XXXXX | XXXXX | MATRIX A | 4 | 3 |
| 2 | DATA | MEMORY_RC | ADD | XXXXX | XXXXX | MATRIX A | 4 | 3 |
| 3 | DATA | DATA | ADD | 0 | 0 | XXXX | 3 | 4 |
| 4 | DATA | NONE | STORE_RC | XXXXX | XXXXX | SUMMA A | 1 | 1 |

**Node table (continued)**

| NodeID | ROW OUT (OUT1) | | | | | | |
|---|---|---|---|---|---|---|---|
| | NODE_ID | POS | DATA | DATA_ID | DIR_ROW | DIR_COL | ENABLE |
| 1 | 2 | LEFT | CMD_RESULT | IN_TOK_DATA_ID | 1 | 0 | IN_RANGE |
| 2 | 2 | LEFT | CMD_RESULT | IN_TOK_DATA_ID | 1 | 0 | IN_RANGE |
| 3 | 3 | RIGHT | CMD_RESULT | IN_TOK_DATA_ID | 0 | 1 | IN_RANGE |
| 4 | XXXXX | XXXXX | XXXXX | XXXXX | XXXXX | XXXXX | XXXXX |

**Node table (continued)**

| NodeID | COL OUT (OUT2) | | | | | | |
|---|---|---|---|---|---|---|---|
| | NODE_ID | POS | DATA | DATA_ID | DIR_ROW | DIR_COL | ENABLE |
| 1 | 1 | LEFT | IN_TOK_DATA_ID | IN_TOK_DATA_ID | 0 | 1 | IN_RANGE |
| 2 | 3 | LEFT | CMD_RESULT | IN_TOK_DATA_ID | 0 | 0 | OUT_RANGE |
| 3 | 4 | LEFT | CMD_RESULT | NDATA | 0 | 0 | OUT_RANGE |
| 4 | XXXXX | XXXXX | XXXXX | XXXXX | XXXXX | XXXXX | XXXXX |

**Start tokens**

| NODE_ID | TRANS_ID | DATA_ID_ROW | DATA_ID_COL | DATA | POS | TYPE |
|---|---|---|---|---|---|---|
| 1 | 0 | 0 | 0 | 0 | XXXXX | Tdata |
| 3 | 0 | 3 | 0 | 0 | RIGHT | Tdata |

Fig. 8.

EP 3 953 815 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2006131297 A

- US 2017139756 A1

**Non-patent literature cited in the description**

- **ARVIND ; RISHIYUR S. NIKHIL.** Executing a Program on the MIT Tagged-Token Dataflow Architecture. *IEEE Trans. on Computers,* March 1990, vol. 39 (3), 300-318